# EUROPÄISCHE PATENTSCHRIFT

(11) **EP 3 292 953 B1**
(45) Veröffentlichungstag und Bekanntmachung des Hinweises auf die Patenterteilung: **03.11.2021**
(21) Anmeldenummer: 17001144.9
(22) Anmeldetag: 04.07.2017
(51) Int. Cl.: B24B 27/04

(54) **SCHLEIFMASCHINE ZUM SCHLEIFEN EINES PROFILS**
GRINDING MACHINE FOR GRINDING A PROFILE
MEULEUSE POUR PROFILÉ

(30) Priorität: 13.07.2016 DE 202016004284 U
(43) Veröffentlichungstag der Anmeldung: 14.03.2018
(73) Patentinhaber: Kapp Werkzeugmaschinen GmbH, 96450 Coburg (DE); NILES Werkzeugmaschinen GmbH, 12681 Berlin (DE)
(72) Erfinder: Schmidt, Matthias, 89192 Rammingen (DE)
(74) Vertreter: Gosdin, Michael

(56) Entgegenhaltungen:
- EP-A2- 2 505 291
- EP-A2- 2 529 871
- DE-A1-102009 040 062

## Beschreibung

Die Erfindung betrifft eine Schleifmaschine zum Schleifen eines Profils, umfassend ein Maschinenbett, wobei auf dem Maschinenbett eine Bearbeitungsvorrichtung angeordnet ist, wobei die Bearbeitungsvorrichtung einen Schwenkkopf umfasst, der eine erste Schleifspindel mit einem ersten Schleifwerkzeug, insbesondere mit einem Schrupp-Schleifwerkzeug, und eine zweite Schleifspindel mit einem zweiten Schleifwerkzeug, insbesondere mit einem Schlicht-Schleifwerkzeug, trägt, wobei auf dem Maschinenbett ein als Drehtisch ausgebildeter Werkstückträger angeordnet ist, wobei die Schwenkachse des Schwenkkopfs horizontal ausgerichtet ist und die Drehachse des Drehtisches vertikal ausgerichtet ist.

Schleifmaschinen der gattungsgemäßen Art sind im Stand der Technik bekannt. Auf einem Maschinenbett ist ein Drehtisch angeordnet, der zur Aufnahme des zu schleifenden Werkstücks dient. Die Bearbeitung des Werkstücks erfolgt mit Schleifspindeln, die mit unterschiedlichen Schleifwerkzeugen bestückt sind, insbesondere einmal mit einer Schrupp-Schleifscheibe und einmal mit einer Schlicht-Schleifscheibe. Alternativ zu Schleifscheiben ist der Einsatz von schneckenförmigen Werkzeugen bekannt.

In der Regel erfolgt lediglich die Bearbeitung eines nicht-ebenen Profils auf einer solchen Maschine. Andere Flächen, insbesondere zylindrische oder stirnseitig ebene Flächen des Werkstücks, werden (in der Regel vor dem Schleifen des Profils) auf entsprechenden Rund- oder Flach-Schleifmaschinen bearbeitet.

In manchen Anwendungsfällen sind derartig hohe Anforderungen an die Genauigkeit der Geometrie des Werkstücks gestellt, so dass alleine schon durch ein Wechseln des Werkstücks von der einen auf die andere Schleifmaschine Probleme entstehen können. Als Beispiel hierfür seien Teile eines Zykloiden-Getriebes genannt, die ein Profil aufweisen, das mit sehr hoher Präzision insbesondere relativ zu einer zylindrischen Umfangs- und Bohrungsfläche des Bauteils gefertigt werden muss.

Vorhandene Schleifmaschinen bieten hierfür noch zu geringe Möglichkeiten, derartig präzise Bauteile reproduzierbar und wirtschaftlich herstellen zu können.

Eine Schleifmaschine der eingangs genannten Art offenbart die EP 2 529 871 A2**.** Die DE 10 2014 203 402 B3 zeigt eine Schleifmaschine, mit der axiale Bohrungen und beidseitig zu bearbeitende ebene Außenflächen geschliffen werden können. Aus der DE 196 42 975 A1 ist ein Werkzeugrevolver einer Werkzeugmaschine mit einer Vielzahl an Bearbeitungswerkzeugen bekannt. Die DE 10 2006 026 184 A1 zeigt ein Drehbearbeitungszentrum. Aus der DE 203 18 660 U1 ist eine Werkzeugmaschine zum Fräsen, Schleifen und Polieren bekannt, bei der eine Vielzahl von Werkzeugen mittels einer Führungseinrichtung in ihre Arbeitsposition gebracht werden. Ähnliche und andere Lösungen zeigen die DE 10 2009 040 062 A1 und die EP 2 505 291 A2**.**

Der Erfindung liegt die **Aufgabe** zugrunde, eine gattungsgemäße Schleifmaschine so fortzubilden, dass es möglich wird, auch Werkstücke mit komplexer Geometrie in hoher Präzision wirtschaftlich herstellen zu können.

Die **Lösung** dieser Aufgabe durch die Erfindung ist dadurch gekennzeichnet, dass der Schwenkkopf der Maschine neben den oben genannten beiden Schleifspindeln weiterhin mindestens eine dritte Schleifspindel mit einem dritten Schleifwerkzeug trägt, wobei das erste Schleifwerkzeug und das zweite Schleifwerkzeug als Profilwerkzeuge zum Schleifen einer nicht-ebenen Kontur ausgeführt sind und wobei das dritte Schleifwerkzeug als Schleifwerkzeug zum Schleifen einer zylindrischen oder ebenen Oberfläche des zu schleifenden Werkstücks ausgeführt ist, wobei die erste Schleifspindel und die zweite Schleifspindel als stabförmige oder rohrförmige Bauteile (also als Schleifarm) mit einer gemeinsamen Längsachse ausgebildet sind, die sich von einem Mittenbereich des Schwenkkopfs nach gegenüberliegenden Seiten weg erstrecken, wobei die dritte Schleifspindel eine Längsachse aufweist, die die Längsachse der ersten und zweiten Schleifspindel senkrecht schneidet, wobei die Längsachse der dritten Schleifspindel die Drehachse des dritten Schleifwerkzeugs ist, und wobei die erste Schleifspindel, die zweite Schleifspindel und die dritte Schleifspindel eine T-förmige Struktur bilden.

Bei dem dritten Schleifwerkzeug handelt es sich bevorzugt um ein solches, mit dem eine zylindrische Fläche des Werkstücks bearbeitet werden kann. Hierzu kommt insbesondere eine solche Schleifscheibe zum Einsatz, die im Radialschnitt rechteckig ausgebildet ist und somit ein Profil aufweist, mit dem besagte zylindrische Fläche geschliffen werden kann. Genauso kann mit besagter Schleifscheibe auch eine ebene stirnseitige Fläche des Werkstücks geschliffen werden.

Bevorzugt ist vorgesehen, dass die Schwenkachse des Schwenkkopfs und die Drehachse des Drehtisches in einer gemeinsamen Ebene liegen.

Der Mittenbereich liegt nahe der Drehachse des Schwenkkopfs. Die Drehachse des ersten Schleifwerkzeugs und die Drehachse des zweiten Schleifwerkzeugs stehen bevorzugt senkrecht auf der genannten Längsachse.

Der Schwenkkopf trägt vorzugsweise weiterhin ein Messelement. Eine bevorzugte Ausführungsform der Erfindung sieht dabei vor, dass die erste, die zweite und die dritte Schleifspindel sowie das Messelement, gesehen in horizontale Richtung, eine kreuzförmige Struktur bilden. Dabei hat das Messelement vorzugsweise eine stiftförmige Gestalt mit einem Sensorelement am einen axialen Ende.

Bevorzugt weist die vorgeschlagene Schleifmaschine des weiteren eine vierte Werkzeugspindel mit einer vierten Schleifscheibe auf, die zum Schleifen einer ebenen stirnseitigen Fläche des Bauteils eingesetzt wird.

Mit der erläuterten Ausgestaltung einer Schleifmaschine wird es möglich, sowohl komplexe Profile als auch zylindrische bzw. ebene Flächen eines Werkstücks in einer Aufspannung zu bearbeiten. Somit kann eine höhere Präzision erreicht werden, die auf anderem Wege nicht zu erzielen ist.

Der zum Einsatz kommende Schwenkkopf ist als Präzisionsdrehtisch ausgebildet.

Bevorzugt und besonders vorteilhaft werden damit Profile und gleichzeitig zylindrische Flächen bearbeitet, wie sie bei Bauteilen für Zykloidengetriebe benötigt werden. Weiterhin ist es im gegebenen Falle auch möglich, in der gleichen Aufspannung, in der die Profile geschliffen werden, auch stirnseitige ebene Flächen zu schleifen.

Bevorzugt sind - wie dargestellt - Profilschleifscheiben für das Schleifen des Profils vorgesehen. Alternativ kann allerdings auch vorgesehen werden, dass statt dessen Schleifschnecken zum Einsatz kommen.

In den Zeichnungen ist ein Ausführungsbeispiel der Erfindung dargestellt. Es zeigen:

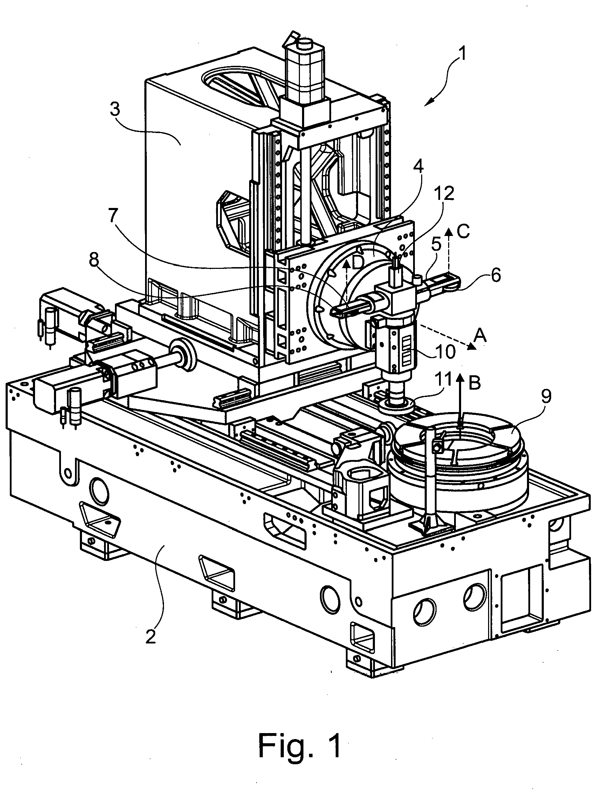

- Fig. 1: in perspektivischer Darstellung eine Schleifmaschine und
- Fig. 2: in perspektivischer Darstellung die Vergrößerung des Arbeitsraums der Schleifmaschine nach Figur 1.

In den Figuren ist eine Schleifmaschine 1 zu sehen, auf der im Ausführungsbeispiel der so genannte "Needle Ring" eines Zykloidengetriebes (nicht dargestellt) feinbearbeitet wird. Die Schleifmaschine 1 weist ein Maschinenbett 2 auf, das eine Bearbeitungsvorrichtung 3 trägt. Weiterhin hat die Schleifmaschine 1 einen Drehtisch 9 für die Aufnahme des (nicht dargestellten) Werkstücks. Die Drehachse B des Drehtisches 9 steht vertikal.

Die Bearbeitungsvorrichtung 3 kann translatorisch auf den Drehtisch 9 zu bewegt bzw. von diesem weg bewegt werden, um Schleifwerkzeuge mit dem Werkstück in Eingriff zu bringen. Die Bearbeitungsvorrichtung 3 hat als wesentliches Bauteil einen Schwenkkopf 4, der um eine Schwenkachse A gedreht werden kann; die Schwenkachse A ist horizontal ausgerichtet.

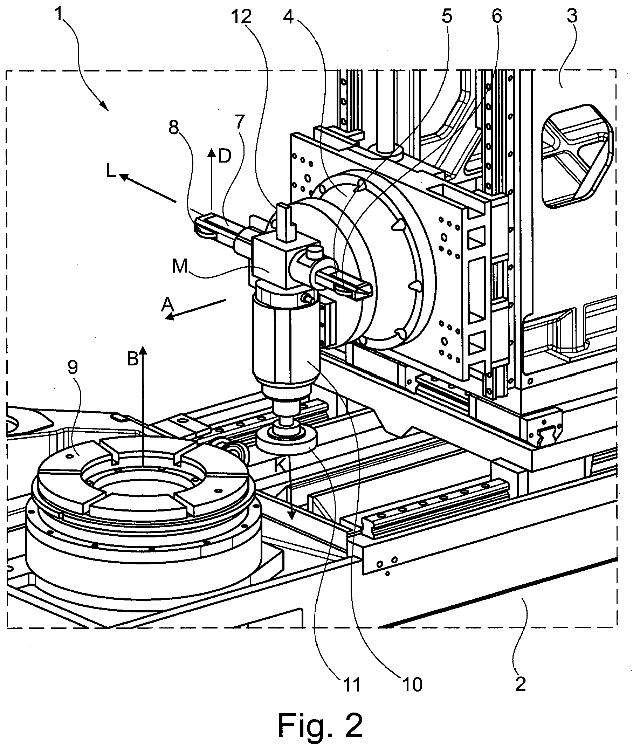

Der Schwenkkopf 4 weist, was am besten aus Figur 2 hervorgeht, drei Schleifspindeln auf, nämlich eine erste Schleifspindel 5, eine zweite Schleifspindel 7 und eine dritte Schleifspindel 10. Jede Schleifspindel 5, 7, 10 trägt jeweils ein Schleifwerkzeug 6, 8 bzw. 11. Das erste Schleifwerkzeug 6 ist eine Profilschleifscheibe für das Schruppen eines Profils des Werkstücks, das zweite Schleifwerkzeug 8 ist eine Profilschleifscheibe für das Schlichten des genannten Profils. Das dritte Schleifwerkzeug 11 ist eine Schleifscheibe, mit der eine zylindrische Außenumfangsfläche des Werkstücks geschliffen werden kann.

Wie zu erkennen ist, sind die Drehachsen C und D des ersten und des zweiten Schleifwerkzeugs 6 und 8 parallel zueinander angeordnet; die beiden Schleifspindeln 5 und 7 sind als rohrförmige Schleifarme ausgebildet, die in ihrem axialen Endbereich die jeweiligen Schleifwerkzeuge 6, 8 tragen. Von einem Mittenbereich M des Schwenkkopfs 4 erstrecken sich die beiden Schleifarme in entgegengesetzte Richtungen; sie haben allerdings dieselbe Längsachse L.

Die dritte Schleifspindel 10 weist eine Längsachse K auf; am Ende der Schleifspindel 10 ist die dritte Schleifscheibe 11 angeordnet.

Weiterhin ist am Schwenkkopf 4 noch ein Messelement 12 in Form eines Messtasters angeordnet.

Wie sich aus den Figuren ergibt, bilden die drei Schleifspindeln 5, 7 und 10 sowie das Messelement 12 eine kreuzförmige Struktur, gesehen aus horizontaler Richtung bzw. in Richtung der Achse A.

Damit ergibt sich folgende Möglichkeit der Bearbeitung:
Ein auf dem Drehtisch 9 gespanntes Werkstück kann zunächst mit der dritten Schleifscheibe 11 an seinem äußeren Umfang rundgeschliffen werden.

Entsprechend ist natürlich auch die Bearbeitung einer inneren Umfangsfläche möglich.

Bei dieser Bearbeitung befindet sich der Schwenkkopf 4 in der Stellung, wie er in den Figuren dargestellt ist.

Durch anschließendes Drehen des Schwenkkopfs 4 um 90° kann die erste Schleifscheibe 6 zum Schruppen des Profils (im Einzelteilverfahren) zum Einsatz vorbereitet werden. Das Profil kann damit vorgearbeitet werden. Nach dem Schruppen des Profils wird der Schwenkkopf 4 um 180° gedreht, so dass die zweite Schleifscheibe 8 zum Schlichten des Profils in die Bearbeitungsposition gebracht wird.

Nach dem Fertigbearbeiten kann eine Messung durch das Messelement 12 erfolgen, wozu der Schwenkkopf 4 um 180° aus der Position gedreht wird, die in den Figuren dargestellt ist.

Die Reihenfolge der Bearbeitungen - was das Rundschleifen und das Profilschleifen anbelangt - kann natürlich auch in anderer Weise erfolgen.

Der Schwenkkopf 4 ist als Präzisionsdrehtisch ausgebildet, was es möglich macht, alle relevanten Feinbearbeitungsvorgänge in einer Aufspannung des Werkstücks vorzunehmen. Ein Umspannen des Werkstücks wird somit entbehrlich und ist die Voraussetzung dafür, die Bearbeitungspräzision auf ein hohes Niveau anzuheben.

Begünstigt wird dies auch durch die kreuzförmige Anordnung der genannten Elemente am Schwenkkopf 4, was eine effektive und wirtschaftliche Fertigung erlaubt.

Gegebenenfalls - und das ist in den Figuren nicht näher dargestellt - kann auch ein Planschleifen der Stirnseite des Werkstücks in der gleichen Aufspannung auf dem Drehtisch 9 erfolgen.

### Bezugszeichenliste:

- 1: Schleifmaschine
- 2: Maschinenbett
- 3: Bearbeitungsvorrichtung
- 4: Schwenkkopf
- 5: erste Schleifspindel
- 6: erstes Schleifwerkzeug
- 7: zweite Schleifspindel
- 8: zweites Schleifwerkzeug
- 9: Drehtisch
- 10: dritte Schleifspindel
- 11: drittes Schleifwerkzeug
- 12: Messelement

- A: Schwenkachse des Schwenkkopfs
- B: Drehachse des Drehtisches
- C: Drehachse des ersten Schleifwerkzeugs
- D: Drehachse des zweiten Schleifwerkzeugs
- L: Längsachse der ersten und zweiten Schleifspindel
- K: Längsachse der dritten Schleifspindel
- M: Mittenbereich des Schwenkkopfs

## Patentansprüche

1. Schleifmaschine (1) zum Schleifen eines Profils, umfassend ein Maschinenbett (2),
wobei auf dem Maschinenbett (2) eine Bearbeitungsvorrichtung (3) angeordnet ist,
wobei die Bearbeitungsvorrichtung (3) einen Schwenkkopf (4) umfasst, der eine erste Schleifspindel (5) mit einem ersten Schleifwerkzeug (6), insbesondere mit einem Schrupp-Schleifwerkzeug, und eine zweite Schleifspindel (7) mit einem zweiten Schleifwerkzeug (8), insbesondere mit einem Schlicht-Schleifwerkzeug, trägt,
wobei auf dem Maschinenbett (2) ein als Drehtisch (9) ausgebildeter Werkstückträger angeordnet ist,
wobei die Schwenkachse (A) des Schwenkkopfs (4) horizontal ausgerichtet ist und die Drehachse (B) des Drehtisches (9) vertikal ausgerichtet ist,
**dadurch gekennzeichnet, dass**
der Schwenkkopf (4) weiterhin mindestens eine dritte Schleifspindel (10) mit einem dritten Schleifwerkzeug (11) trägt,
wobei das erste Schleifwerkzeug (6) und das zweite Schleifwerkzeug (8) als Profilwerkzeuge zum Schleifen einer nicht-ebenen Kontur ausgeführt sind und wobei das dritte Schleifwerkzeug (11) als Schleifwerkzeug zum Schleifen einer zylindrischen oder ebenen Oberfläche des zu schleifenden Werkstücks ausgeführt ist,
wobei die erste Schleifspindel (5) und die zweite Schleifspindel (7) als stabförmige oder rohrförmige Bauteile mit einer gemeinsamen Längsachse (L) ausgebildet sind, die sich von einem Mittenbereich (M) des Schwenkkopfs (4) nach gegenüberliegenden Seiten weg erstrecken,
wobei die dritte Schleifspindel (10) eine Längsachse (K) aufweist, die die Längsachse (L) der ersten und zweiten Schleifspindel (5, 7) senkrecht schneidet,
wobei die Längsachse (K) der dritten Schleifspindel (10) die Drehachse des dritten Schleifwerkzeugs (11) ist, und
wobei die erste Schleifspindel (5), die zweite Schleifspindel (7) und die dritte Schleifspindel (10) eine T-förmige Struktur bilden.

2. Schleifmaschine nach Anspruch 1, **dadurch gekennzeichnet, dass** die Schwenkachse (A) des Schwenkkopfs (4) und die Drehachse (B) des Drehtisches (9) in einer gemeinsamen Ebene liegen.

3. Schleifmaschine nach Anspruch 1 oder 2, **dadurch gekennzeichnet, dass** die Drehachse (C) des ersten Schleifwerkzeugs (6) und die Drehachse (D) des zweiten Schleifwerkzeugs (8) senkrecht auf der Längsachse (L) stehen.

4. Schleifmaschine nach einem der Ansprüche 1 bis 3, **dadurch gekennzeichnet, dass** der Schwenkkopf (4) weiterhin ein Messelement (12) trägt.

5. Schleifmaschine nach Anspruch 4, **dadurch gekennzeichnet, dass** die erste, die zweite und die dritte Schleifspindel (5, 7, 10) sowie das Messelement (12), gesehen in Richtung der Schwenkachse (A) des Schwenkkopfs (4), eine kreuzförmige Struktur bilden.

## Claims

1. Grinding machine (1) for grinding of a profile, comprising a machine bed (2),
wherein a machining device (3) is arranged on the machine bed (2),
wherein the machining device (3) comprises a swivel head (4) which carries a first grinding spindle (5) with a first grinding tool (6), especially with a roughing grinding tool, and a second grinding spindle (7) with a second grinding tool (8), especially with a finishing grinding tool,
wherein a workpiece carrier being a rotary table (9) is arranged on the machine bed (2),
wherein the swivel axle (A) of the swivel head (4) is directed horizontally and the axis of rotation (B) of the rotary table (9) is directed vertically,
**characterized in**
**that** the swivel head (4) further carries at least one third grinding spindle (10) with a third grinding tool (11),
wherein the first grinding tool (6) and the second grinding tool (8) are designed as profile tools for grinding of a non-planar contour and wherein the third grinding tool (11) is designed as grinding tool for grinding of a cylindrical or planar surface of the workpiece which has to be ground,
wherein the first grinding spindle (5) and the second grinding spindle (7) are designed as rod-shaped or tubular parts with a common longitudinal axis (L) which extend to opposite sides from a centre region (M) of the swivel head (4),
wherein the third grinding spindle (10) comprises a longitudinal axis (K) which intersects perpendicular the longitudinal axis (L) of the first and second grinding spindle (5, 7),
wherein the longitudinal axis (K) of the third grinding spindle (10) is the axis of rotation of the third grinding tool (11) and
wherein the first grinding spindle (5), the second grinding spindle (7) and the third grinding spindle (10) form a T-shaped structure.

2. Grinding machine according to claim 1, **characterized in that** the swivel axle (A) of the swivel head (4) and the axis of rotation (B) of the rotary table (9) are arranged in a common plane.

3. Grinding machine according to claim 1 or 2, **characterized in that** the axis of rotation (C) of the first grinding tool (6) and the axis of rotation (D) of the second grinding tool (8) are perpendicular to the longitudinal axis (L).

4. Grinding machine according to one of claims 1 to 3, **characterized in that** the swivel head (4) carries furthermore a measuring element (12).

5. Grinding machine according to claim 4, **characterized in that** the first, the second and the third grinding spindle (5, 7, 10) as well as the measuring element (12) form a crosswise structure seen in the direction of the swivel axle (A) of the swivel head (4).

## Revendications

1. Meuleuse (1) servant au meulage d'un profilé, comportant un banc de machine (2),
un dispositif d'usinage (3) étant disposé sur le banc de machine (2),
le dispositif d'usinage (3) comportant une tête pivotante (4) qui porte une première broche porte-meule (5) dotée d'un premier outil de meulage (6), en particulier d'un outil de meulage de dégrossissage, et une deuxième broche porte-meule (7) dotée d'un deuxième outil de meulage (8), en particulier d'un outil de meulage de finissage, un porte-pièce réalisé sous forme de table rotative (9) étant disposé sur le banc de machine (2),
l'axe de pivotement (A) de la tête pivotante (4) étant orienté horizontalement et l'axe de rotation (B) de la table rotative (9) étant orienté verticalement, **caractérisée en ce que**
la tête pivotante (4) porte en outre au moins une troisième broche porte-meule (10) dotée d'un troisième outil de meulage (11),
le premier outil de meulage (6) et le deuxième outil de meulage (8) étant réalisés sous forme d'outils de profilage servant au meulage d'un contour non plan et le troisième outil de meulage (11) étant réalisé sous forme d'outil de meulage servant au meulage d'une surface cylindrique ou plane de la pièce à meuler,
la première broche porte-meule (5) et la deuxième broche porte-meule (7) étant réalisées sous forme de composants en forme de barres ou tubulaires présentant un axe longitudinal commun (L) qui s'étend à partir d'une région centrale (M) de la tête pivotante (4) vers des côtés opposés,
la troisième broche porte-meule (10) comprenant un axe longitudinal (K) qui coupe perpendiculairement l'axe longitudinal (L) de la première et de la deuxième broche porte-meule (5, 7),
l'axe longitudinal (K) de la troisième broche porte-meule (10) étant l'axe de rotation du troisième outil de meulage (11), et
la première broche porte-meule (5), la deuxième broche porte-meule (7) et la troisième broche porte-meule (10) formant une structure en forme de T.

2. Meuleuse selon la revendication 1, **caractérisée en ce que** l'axe de pivotement (A) de la tête pivotante (4) et l'axe de rotation (B) de la table rotative (9) sont situés dans un plan commun.

3. Meuleuse selon la revendication 1 ou 2, **caractérisée en ce que** l'axe de rotation (C) du premier outil de meulage (6) et l'axe de rotation (D) du deuxième outil de meulage (8) sont perpendiculaires à l'axe longitudinal (L) .

4. Meuleuse selon l'une des revendications 1 à 3, **caractérisée en ce que** la tête pivotante (4) porte en outre un élément de mesure (12).

5. Meuleuse selon la revendication 4, **caractérisée en ce que** la première, la deuxième et la troisième broche porte-meule (5, 7, 10) ainsi que l'élément de mesure (12), vus dans la direction de l'axe de pivotement (A) de la tête pivotante (4), forment une structure cruciforme.
